# EUROPEAN PATENT SPECIFICATION

(11) **EP 4 314 406 B1**
(45) Date of publication and mention of the grant of the patent: **05.03.2025**
(21) Application number: 22718694.7
(22) Date of filing: 28.03.2022
(51) Int. Cl.: D21H 11/12, B01D 39/16, B65D 85/808, D21H 13/08, D21H 17/53, D21H 27/08, D21H 27/10, B65D 85/804

(54) **FILTER MATERIAL FOR FOOD PACKAGING**
FILTERMATERIAL FÜR LEBENSMITTELVERPACKUNGEN
MATÉRIAU FILTRANT D'EMBALLAGE D'ALIMENTS

(30) Priority: 31.03.2021 EP 21290019
(43) Date of publication of application: 07.02.2024
(73) Proprietor: Glatfelter Gernsbach GmbH, 76593 Gernsbach (DE)
(72) Inventor: JORDAN, Andrew K., Wales NP25 4TT (GB); INGILDEEV, Denis, 76593 Gernsbach (DE); PASSERAT, Béatrice, 76534 Baden-Baden (DE)
(74) Representative: Lavoix
(86) International application number: PCT/EP2022/058129
(87) International publication number: WO 2022/207556

(56) References cited:
- EP-A1- 1 837 363
- EP-A1- 3 067 455
- WO-A1-2016/040754
- DATABASE WPI Week 202002, Derwent World Patents Index; AN 2020-22201M, XP002804118

## Description

### FIELD OF THE INVENTION

The present invention relates to a filter material having advantageous properties in terms of sustainability (such as natural basis and/or biodegradability) and/or strength (in particular wet tensile strength and/or wet crimp strength), the use of a non-fibrous binder for enhancing certain properties, more specifically wet tensile strength and/or wet crimp strength, of a filter material, a process for producing the filter material and food packaging, in particular tea bags, made from the filter material.

### BACKGROUND

Food packaging for the preparation of hot and cold beverages, such as tea bags, typically contain a synthetic plastic binder to improve the manual folded crimp down the center of the hot and cold beverage bags that keeps the contents in, and to improve other physical properties such as tea dust retention and stretch properties of the paper web. However, such synthetic plastic material generally requires many hundreds of years to break down in the environment. Over the last years, concerns about plastic contamination of the environment have created an increasing demand for fully compostable/biodegradable filter materials that can be suitably used for food packaging including tea bags.

Not only the biodegradability or compostability of such filter material becomes a more and more important topic, but also the finiteness of fossil resources creates a demand for biobased, such as plant-based, materials that may replace the conventional, oil-based plastic materials, such as the synthetic plastic binder typically used in food packaging for the preparation of hot and cold beverages, as described in the foregoing.

EP 3 067 455 A1 discloses a nonwoven web for producing beverage infusion pouches and bags, consisting of a plurality of mono-component mono-constituent Polylactic Acid (PLA) fibers for forming a non-woven web through dry thermo-bonding; said mono-component mono-constituent Polylactic Acid (PLA) fibers having a crystalline portion; and an amorphous PLA powder added to said mono-constituent Polylactic Acid (PLA) fibers, said PLA powder having a melting point below the melting point of said mono-component, mono-constituent PLA fibers.

EP 1 837 363 A1 discloses a single-layer matte film or sheet comprising a filler and a biodegradable resin (A) comprising a blend of a biodegradable polyester (a1) having a glass transition temperature Tg of 10°C or lower and a biodegradable polyester (a2) having a glass transition temperature Tg of 30°C or higher, wherein at least one surface thereof has a certain surface gloss.

CN 110 878 488 A discloses a leather release paper comprising 80-100 parts by weight softwood pulp fibers, 30-50 parts by weight hardwood pulp fibers, 10-15 parts by weight alumina powder, 5-10 parts by weight calcium carbonate powder, 5-10 parts by weight diatomaceous earth, 15-20 parts by weight polyurethane resin, 5-10 parts by weight polylactic acid, 3-5 parts by weight dispersant, 3-5 parts by weight binding agent, 3-5 parts by weight stabilizer, 5-10 parts by weight polyvinyl alcohol and 15-30 parts by weight release agent.

WO 2016/040754 A1 discloses a pouched product adapted for release of a water-soluble component therefrom, comprising an outer water-permeable pouch defining a cavity containing a composition comprising a water-soluble component capable of being released through the water-permeable pouch and having a surface area, wherein the outer water-permeable pouch comprises a nonwoven web comprising a plurality of heat sealable binder fibers blended with a second plurality of dissimilar fibers, the nonwoven web being carded, hydroentangled, and point bonded.

Thus, there may be a need for a filter material for hot and cold beverage bags or food packaging that make use of a biodegradable, industrial and home compostable plant-based binder material that meets the requirements of a current hot and cold beverage bag using existing synthetic binder materials.

### OBJECT OF THE INVENTION

The present invention aims at overcoming the above described problems and drawbacks. Thus, it is an object of the present invention to provide a filter material wherein a biobased and/or biodegradable binder material is used which enhances certain properties, in particular wet tensile strength and/or wet crimp strength, of a filter material suitable for the preparation of hot and cold beverages, in particular for a tea bag.

### SUMMARY OF THE INVENTION

The present inventors have made diligent studies for solving this object and have found that this object can be solved by the use of a non-fibrous (or particulate) (in particular hydrophobic) binder selected from the group consisting of polylactic acid, polyglycolic acid and copolymers thereof. Typically, tea bags use a folded center crimp to ensure no leakage of contents. The inventors have in particular found that these specific biobased and biodegradable binders may firmly bind to (in particular natural cellulosic) fibers, may be hydrophobic and may prevent water ingress into the crimped area, thus enhancing the strength of the crimp. As an additional benefit, the binder may create a more permanent fold that is more difficult to open. As a further enhancement, without wishing to be bound to any theory, the binder may help to modify the filter material by reducing its pore size and numbers thereby reducing the transfer of the contents dust through the filter material and into the outer packaging.

Accordingly, the present invention relates to a filter material suitable for the preparation of hot and cold beverages, in particular for a tea bag, the filter material comprising (a) natural cellulosic fibers, and (b) at least one non-fibrous (or particulate) (in particular hydrophobic) binder selected from the group consisting of polylactic acid, polyglycolic acid and copolymers thereof (e.g. poly(lactic-co-glycolic acid)).

The present invention further relates to the use of a non-fibrous (particulate) binder selected from the group consisting of polylactic acid, polyglycolic acid and copolymers thereof for enhancing wet crimp strength of a filter material.

Moreover, the present invention relates to a process for producing a filter material suitable for the preparation of hot and cold beverages, the method comprising the steps of providing a web comprising natural cellulosic fibers, and applying at least one non-fibrous (particulate) binder selected from the group consisting of polylactic acid, polyglycolic acid and copolymers thereof to the web.

In addition, the present invention further relates to a food packaging, in particular a tea bag, comprising or made from the filter material as described herein.

Other objects and many of the attendant advantages of embodiments of the present invention will be readily appreciated and become better understood by reference to the following detailed description of embodiments and the accompanying drawings.

### BRIEF DESCRIPTION OF THE DRAWINGS

Figure 1 illustrates exemplary stages in non-heatseal double chamber bag formation.
Figure 2 illustrates the non-heatseal paper crimp formation.
Figure 3 is a graphical illustration of experimental results of measurements of the dry tensile strength of filter materials.
Figure 4 is a graphical illustration of experimental results of measurements of the wet tensile strength of filter materials.
Figure 5 is a graphical illustration of experimental results of measurements of the dry crimp strength of filter materials.
Figure 6 is a graphical illustration of experimental results of measurements of the wet crimp strength of filter materials.
Figure 7 is a graphical illustration of experimental results of measurements of the water climb (wicking) of filter materials.

### DETAILED DESCRIPTION OF THE INVENTION

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a filter material may be combined with any other exemplary embodiment of a filter material, with any exemplary embodiment of the use of a non-fibrous binder, with any exemplary embodiment of a process for producing a filter material or with any exemplary embodiment of a food packaging and vice versa, unless specifically stated otherwise.

Where an indefinite or definite article is used when referring to a singular term, such as "a", "an" or "the", a plural of that term is also included and vice versa, unless specifically stated otherwise, whereas the word "one" or the number "1", as used herein, typically means "just one" or "exactly one".

The expression "comprising", as used herein, includes not only the meaning of "comprising", "including" or "containing", but may also encompass "consisting essentially of" and "consisting of".

In a first aspect, the present invention relates to a filter material.

The term "filter material", as used herein, may in particular mean a fibrous product that possess filtration or infusion characteristics to a certain degree. The filter material may include a nonwoven web (which may also be referred to as "fabric" or "paper"), such as a web of individual fibers which are intertwined, but not in a regular manner as in a knitted or woven fabric.

The filter material is suitable for the preparation of hot and cold beverages. In other words, the filter material exhibits filtration or infusion characteristics that allow the preparation of hot and cold (infusion) beverages, such as tea or coffee. In particular, the filter material should meet all food legislation standards for cold and hot beverages.

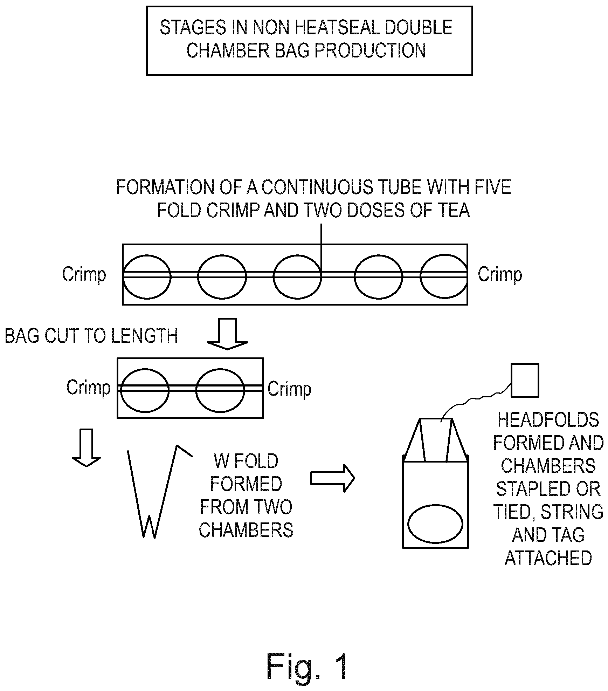

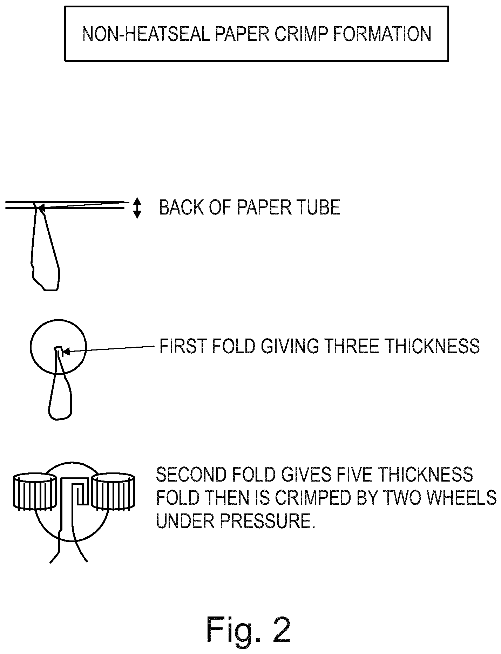

In an embodiment, the filter material is suitable for a tea bag, such as a double chamber tea bag, in particular a non-heatseal double chamber tea bag. Exemplary stages in non-heatseal double chamber bag formation are illustrated in Figure 1. Moreover, Figure 2 illustrates the crimp formation of non-heatseal paper.

In an embodiment, the filter material is non-heatsealable. Typically, non-heatsealable filter material does substantially not comprise any heatsealable (or thermoplastic) fibers or, in other words, non-heatsealable filter material is substantially composed of non-heatsealable fibers. Non-heatsealable filter material may be particularly suitable for the production of double chamber tea bags. In an alternative embodiment, the filter material may however also be a heatsealable filter material, i.e. may comprise heatsealable fibers, such as thermoplastic fibers.

The filter material comprises fibers.

The fibers comprise natural cellulosic fibers, such as wood pulp, wood fibers, hemp fibers, manila fibers, jute fibers, sisal fibers, abaca fibers, kraft pulp or mixtures thereof. The term "natural (cellulosic) fibers", as used herein, may in particular mean that the (cellulosic) fibers are of natural origin and have not been (synthetically) modified, in contrast to synthetic or semi-synthetic (cellulosic) fibers, such as regenerated cellulose fibers (e.g. viscose or lyocell).

In an embodiment, the natural cellulosic fibers are selected from the group consisting of wood fibers, hemp fibers, manila fibers, jute fibers, sisal fibers, abaca fibers, kraft pulp or mixtures thereof. Such fibers are particularly advantageous in view of their biodegradability and/or because they are biobased. The fibers may further comprise regenerated cellulose fibers.

The term "biodegradable" which may also be referred to as "compostable", as used herein, may in particular mean that the material concerned, such as the fibers, the non-fibrous binder or the entire filter material, complies at least with the requirements for industrial compostability, for instance in accordance with at least one of EN 13432, EN 14995, ASTM D5988-18, ASTM D6400-19 and ASTM D6868-19, and preferably also with the requirements for home compostability, for instance in accordance with draft prEN 17427, and may preferably also be marine biodegradable, for instance in accordance with ASTM D6691-17.

The term "biobased" (which may also be referred to as "bio-derived"), as used herein, may in particular mean that the material concerned, such as the fibers, the non-fibrous binder or the entire filter material, can be derived from material of biological or natural origin, in particular from plants or other renewable entities.

In an embodiment, the filter material comprises (based on the total weight of the fibers):
10 to 100 wt.-% of natural cellulosic fibers, such as from 10 to 90 wt.-% natural cellulosic fibers, in particular from 20 to 80 wt.-% natural cellulosic fibers;
0 to 40 wt.% of regenerated (man-made) cellulose fibers, such as from 5 to 30 wt.-% regenerated cellulose fibers, in particular from 10 to 20 wt.-% regenerated cellulose fibers; and
0 to 40 wt.-% of thermoplastic biodegradable fibers, such as from 5 to 30 wt.-% thermoplastic biodegradable fibers, in particular from 10 to 20 wt.-% thermoplastic biodegradable fibers.

The natural cellulosic fibers may be selected from wood cellulosic fibers, such as wood pulp (softwood and/or hardwood), and (long) cellulosic fibers (for instance from annual plants) having an average fiber length of from 1 mm to 10 mm, such as from 2 mm to 8 mm, in particular abaca and/or sisal fibers. Wood pulp may in particular denote a (lignocellulosic) fibrous material prepared by chemically or mechanically separating cellulose fibers from wood, such as by a kraft process (sulfate process). Kraft wood pulp may include northern bleached softwood kraft (NBSK) and southern bleached softwood kraft (SBSK) as well as their unbleached variants.

The term "regenerated cellulose fibers", as used herein, may in particular denote manmade cellulose fibers obtained by a solvent spinning process. In an embodiment, the regenerated cellulose fibers may be selected from the group consisting of viscose (rayon) or lyocell (tencel). Viscose is a type of solvent spun fiber produced according to the viscose process typically involving an intermediate dissolution of cellulose as cellulose xanthate and subsequent spinning to fibers. Lyocell is a type of solvent spun fiber produced according to the aminoxide process typically involving the dissolution of cellulose in N-methylmorpholine N-oxide and subsequent spinning to fibers.

The term "thermoplastic biodegradable fibers", as used herein, may in particular denote biodegradable fibers that soften and/or partly and/or fully melt when exposed to heat and are capable to bind with each other or to other non-thermoplastic fibers, such as cellulose fibers, upon cooling and resolidifying. For example, the thermoplastic biodegradable fiber may be selected from the group consisting of a polylactic acid (PLA), a polybutylene succinate (PBS), a polybutylene adipate terephthalate (PBAT), a polyhydroxyalkanoate (PHA) and copolymers of PHA, and other fibers made of biodegradable thermoplastic polymers. Combinations of two or more thereof may also be applied.

In an embodiment, the thermoplastic biodegradable fiber comprises a multicomponent fiber, in particular a bicomponent fiber, such as bicomponent fibers of the sheath-core type. Bicomponent fibers are composed of two sorts of polymers having different physical and/or chemical characteristics, in particular different melting characteristics. A bicomponent fiber of the sheath-core type typically has a core of a higher melting point component and a sheath of a lower melting point component.

In an embodiment, substantially all fibers comprised in the filter material may be biodegradable fibers. In other words, it may be advantageous that the filter material does substantially not comprise any other fibers than biodegradable fibers or that the filter material is substantially free of non-biodegradable fibers. With regard to embodiments comprising "substantially no other fibers than biodegradable fibers" or being "substantially free of non-biodegradable fibers", other fibers than biodegradable fibers, if any, may still be present in relatively minor amounts of up to 10, up to 5, up to 3, up to 2, or up to 1 wt.-% based on the total weight of the non-woven fabric. Non-biodegradable fibers may be present as long as they meet the requirements of the final certification.

The coarseness of the fibers is not particularly limited. Typically, the fibers may have a fiber coarseness of from 0.3 to 3.5 dtex, such as from 0.6 to 2.5 dtex.

The filter material comprises at least one non-fibrous binder.

The term "non-fibrous", which may synonymously or interchangeably also be referred to as "particulate", as used herein, may in particular denote that the binder is in the form of particles (characterized for instance by an average particle size), rather than in the form of fibers (characterized for instance by a fiber length or diameter). The term "non-fibrous" in particular serves to differentiate the non-fibrous binder according to the present invention from a binder fiber, as it is sometimes used in a filter material for enhancing the tensile strength.

The term "binder", as used herein, may in particular denote a compound that is able to bind (e.g. by forming covalent bonds, by ionic interactions or the like) to two or more fibers, thereby interconnecting the fibers, resulting in an increased (tensile) strength of the web or fabric.

The at least one non-fibrous binder is selected from the group consisting of polylactic acid (PLA), polyglycolic acid (PGA) and copolymers thereof (e.g. poly(lactic-co-glycolic acid)). In particular, polylactic acid has proven to be particularly suitable for enhancing the wet tensile strength and/or the wet crimp strength of a filter material. The polylactic acid may be typically selected from the group consisting of poly-D-lactic acid (PDLA), poly-L-lactic acid (PLLA) and poly-D,L-lactic acid (PDLLA).

In an embodiment, the at least one non-fibrous binder is hydrophobic, which may be advantageous in terms of an enhanced wet crimp strength. Without wishing to be bound to any theory, the present inventors assume that a hydrophobic non-fibrous binder may suppress water ingress into the crimped area, thereby enhancing the strength of the crimp even under wet conditions.

In an embodiment, the at least one non-fibrous binder may have an amorphous structure, which may be advantageous in terms of (a faster) biodegradability.

In an embodiment, the at least one non-fibrous binder has an average particle size of less than 100 µm, in particular less than 2.5 µm. The average particle size of the non-fibrous binder may be determined for instance by visual microscopic observation with an appropriate magnification, for instance by using a light optical microscope, an electron microscope (such as a transmission electron microscope (TEM) or a high resolution scanning electron microscope (SEM)) and by randomly selecting an appropriate number of non-fibrous binder particles and calculating the average (such as an arithmetic mean) of the individual sizes.

In an embodiment, the at least one non-fibrous binder is contained in an amount of from 0.1 to 30 wt.-%, such as in an amount of from 0.5 to 25 wt.-%, such as in an amount of from 1 to 20 wt.-%, such as in an amount of from 5 to 18 wt.-%, such as in an amount of from 10 to 15 wt.-%, in particular in an amount of about 12 wt.-%, based on the entire filter material.

In an embodiment, the at least one non-fibrous (particulate) binder is present at substantially an entire surface (or both surfaces) of the filter material. For example, at least 95 %, in particular at least 98 %, such as 100 %, of one or both surface areas of the filter material may be provided with the at least one non-fibrous (particulate) binder. In particular, the at least one non-fibrous (particulate) binder may be present at a crimp portion (crimped area) of a tea bag formed from the filter material.

In an embodiment, the filter material comprises a single layer or a multiple layer web. For instance, the filter material may be manufactured as a single or multiple layer web where the at least one non-fibrous binder may be added either to a single layer product or any layer in a multiple layer product and either the top surface or the bottom surface of the web of the single layer or multiple layer web.

In an embodiment, the filter material may further comprise a wet-strength agent. The term "wet-strength agent", as used herein, may in particular denote an agent that improves the tensile strength of the filter material in the wet state, for instance by forming covalent bonds. Suitable examples of the wet-strength agent may include a melamine-formaldehyde resin or a polyamine-polyamide-epichlorohydrine resin. The wet-strength agent may be comprised in an amount of from 0.1 to 3 wt.-%, such as in an amount of from 0.2 to 2 wt.-%, such as in an amount of from 0.35 to 1.5 wt.-%, such as in an amount of from 0.5 to 1 wt.-%, based on the total weight of the filter material.

The grammage or basis weight of the filter material according to the present invention is not particularly limited. Typically, the filter material has a grammage of from 8 to 120 g/m², in particular from 9 to 50 g/m², such as from 10 to 30 g/m². The grammage may be determined in accordance with TAPPI T 410 (om-19).

In an embodiment, the filter material is biodegradable. In an embodiment, the filter material complies with the requirements of EN 13432 and preferably with home compostability conditions.

In an embodiment, the filter material has a MD (machine direction) wet tensile strength of at least 20 g/50 mm, for instance up to 30 g/50 mm, such as from 22 to 28 g/50 mm. The wet tensile strength may be determined in accordance with TAPPI T 494 (om-13).

In an embodiment, the filter material has a wet crimp strength of at least 80 g/50 mm, for instance up to 120 g/50 mm, such as from 90 to 110 g/50 mm. The wet crimp strength may be determined by a test method based on TAPPI T 494, as explained in further detail in the experimental part below.

In an embodiment, the filter material exhibits substantially no wicking (capillary rise, capillary effect), such as a water climb of not more than 5 mm/min, preferably not more than 2 mm/min, most preferably 0 mm/min. The wicking (capillary rise) may be determined in accordance with ISO 8787, NWSP 010.1.R0 (20) or T431 (cm-10).

In an embodiment, the filter material is particularly well suited for hot or cold beverage filtration, as well as filtration under a certain pressure. The filter material can be processed and filled with infusible materials, such as tea or coffee, by means of conventional packaging machines, making it highly suitable for mass-produced articles, such as tea bags.

In an embodiment, the filter material may be obtainable by a process as described herein.

In a second aspect, the present invention relates to the use of a non-fibrous (particulate) binder selected from the group consisting of polylactic acid, polyglycolic acid and copolymers thereof for enhancing wet crimp strength (preferably without wicking) of a filter material.

In a third aspect, the present invention relates to a process for producing a filter material suitable for the preparation of hot and cold beverages.

The process comprises the steps of:
providing a web comprising natural cellulosic fibers, and
applying at least one non-fibrous (particulate) binder selected from the group consisting of polylactic acid, polyglycolic acid and copolymers thereof to the web.

A (nonwoven) web may be provided (prepared) for instance by a conventional paper-making process using a wet-laid machine, i.e. by a wet-laid process, in particular by means of an inclined wire papermaking machine, as described for instance in US 3,785,922, the disclosure of which is incorporated herein by reference or a fourdrinier paper machine. Alternatively, the (nonwoven) web may be provided (prepared) for instance by a dry-forming air-laid nonwoven manufacturing process, described for instance in US 3,905,864, the disclosure of which is incorporated herein by reference.

Subsequently, the at least one non-fibrous (particulate) binder is applied to the web. In an embodiment, the step of applying the at least one non-fibrous binder comprises applying a liquid (such as a dispersion, emulsion or suspension, for instance in water) comprising the at least one non-fibrous binder, in particular wherein the liquid is applied by means of a size press and/or by at least one technique selected from the group consisting of impregnating, coating, printing and spraying. In a preferred embodiment, the at least one non-fibrous binder may be applied by means of a size-press. By taking this measure, it may be possible to apply the at least one non-fibrous binder in a very efficient manner at substantially an entire surface (or both surfaces) or within the entire structure of the filter material.

In an embodiment, the process further comprises, a step of drying the filter material, in particular if the web has been prepared by means of a wet-laid process.

In an embodiment, the process further comprises, after the step of applying the at least one non-fibrous binder (and optionally drying the filter material), a step of heating the filter material, in particular to a temperature of at least 125 °C, preferably at least 150 °C, in particular at a temperature sufficient to melt or cure the binder and bind it to the fibers.

In an embodiment, the process may be suitable for producing a filter material as described herein.

In a fourth aspect, the present invention relates to food packaging (such as pouches), in particular a tea bag, comprising or made from the filter material.

In an embodiment, the food packaging is a tea bag, wherein the at least one non-fibrous binder is present throughout the entire filter material (over the entire area or surface of the filter material), in particular at a crimp portion (crimped area) of the tea bag.

The present invention is further described by the following examples, which are solely for the purpose of illustrating specific embodiments, and are not construed as limiting the scope of the invention in any way.

### Examples

Filter materials having a composition as indicated below have been prepared and tested for specific properties, in particular dry and wet tensile strength, dry and wet crimp strength as well as water climb (vertical capillary rise, wicking).

As a base substrate for all evaluated filter materials, a conventional non-heatsealable abaca wood paper containing a wet-strength agent but no binders and having a basis weight of 12.7 g/m² was used (designated in the following as "612 base standard"). To this 612 base standard, various binders as indicated below were applied by means of a size press and curing was carried out for 10 seconds at 200°C in a laboratory oven. As a reference example, a sample of the 612 base standard was size pressed with water (i.e. containing no binder) and treated otherwise in the same manner as the samples where a binder has been applied.

Synthetic binders, such as methyl acrylate binders, are available for instance from BTC Europe GmbH (BASF SE), Clariant AG or Rohm and Haas (Dow Chemical). Polybutylene succinate (PBS) binders are available for instance from Mitsubishi Chemical Corporation or Ueno Fine Chemicals Industry, Ltd. Polylactic acid (PLA) binders are available for instance from SK Chemicals or Unitika Ltd.

### Comparative Examples:

- 612 base standard (not size pressed)
- 612 base (size pressed with water)
- 612 base + 1.5% CMC (carboxymethyl cellulose; biobased binder; meets EN 13432)
- 612 base + 6% synthetic methyl acrylate binder; not biodegradable
- 612 base + 12% synthetic methyl acrylate binder; not biodegradable
- 612 base + 6% polybutylene succinate; biodegradable binder
- 612 base + 12% polybutylene succinate; biodegradable binder

### Examples according to the invention:

- 612 base + 6% PLA binder type A
- 612 base + 12% PLA binder type A
- 612 base + 6% PLA binder type B
- 612 base + 12% PLA binder type B
- 612 base + 6% PLA binder type C
- 612 base + 12% PLA binder type C

### Test methods:

### Dry and wet tensile strength:

The dry and wet tensile strengths of the filter materials were determined in accordance with TAPPI T 494 (om-13) Tensile Properties of paper and paperboard using constant rate of elongation apparatus. "MD dry tensile" means the dry tensile strength in machine direction and "wet MD tensile" means the wet tensile strength in machine direction.

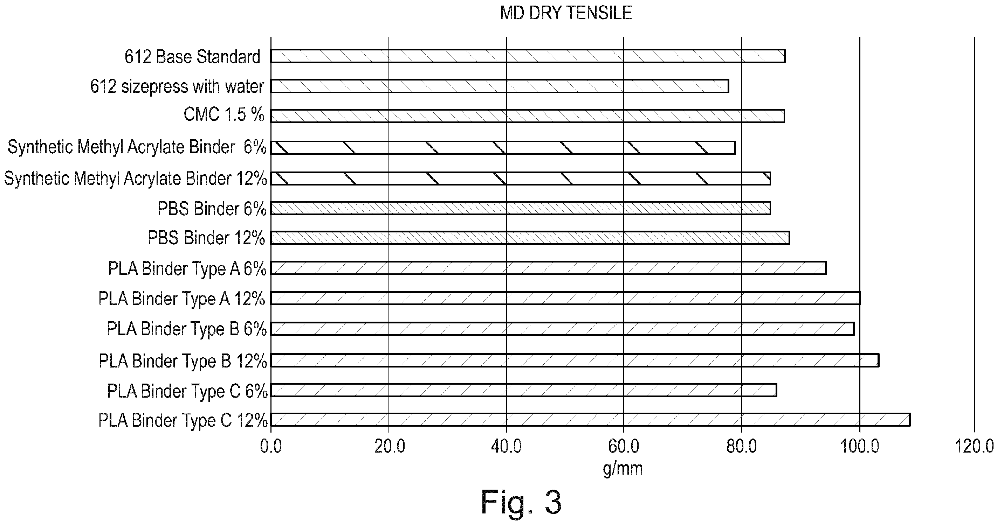

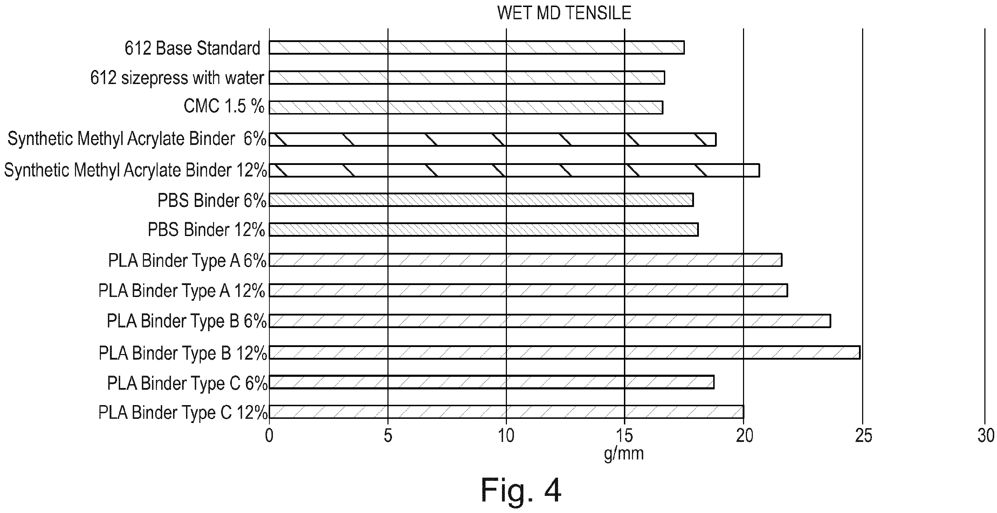

The results of the measurements of the MD dry tensile strength of the tested filter materials are shown in Figure 3 and the results of the measurements of the MD wet tensile strength of the tested filter materials are shown in Figure 4.

### Dry and wet crimp strength:

The dry and wet crimp strengths of the filter materials were determined by a test method based on the tensile strength test method TAPPI T 494, constant rate of elongation, as elucidated in further detail below:
Dry crimp strength:
   - A sheet was folded once in half in the MD direction. On the edge opposite to the fold, a narrow 1 mm strip containing the 2 edges is folded back. This initial fold is then folded twice more, ensuring the folds are tight and do not increase the width of the folded narrow strip to beyond 2 mm.
   - The 3 times folded edge of the paper is then run through a crimping wheel apparatus composed of 2 knurled gear wheels. The base wheel is 3 mm wide, composing 104 teeth and a diameter of 28 mm. The top wheel is 1 mm wide composing 82 teeth and has a diameter of 25 mm. 8 samples are cut from the crimped strip, 50 mm wide.
   - The original folded edge is cut on each sample to give 2 tails which are clamped into the jaws of a tensile testing machine.
   - The 50 mm wide formed crimps are pulled apart at 50 mm/min and the resultant peak load expressed in g/50 mm.
Wet crimp strength:
   - The crimped samples are formed as above and mounted in the jaws of the tensile tester. Water at 20 °C is sprayed onto the crimp immediately prior to pulling the crimp apart at 50 mm/min. The resultant peak load is expressed in g/50 mm.

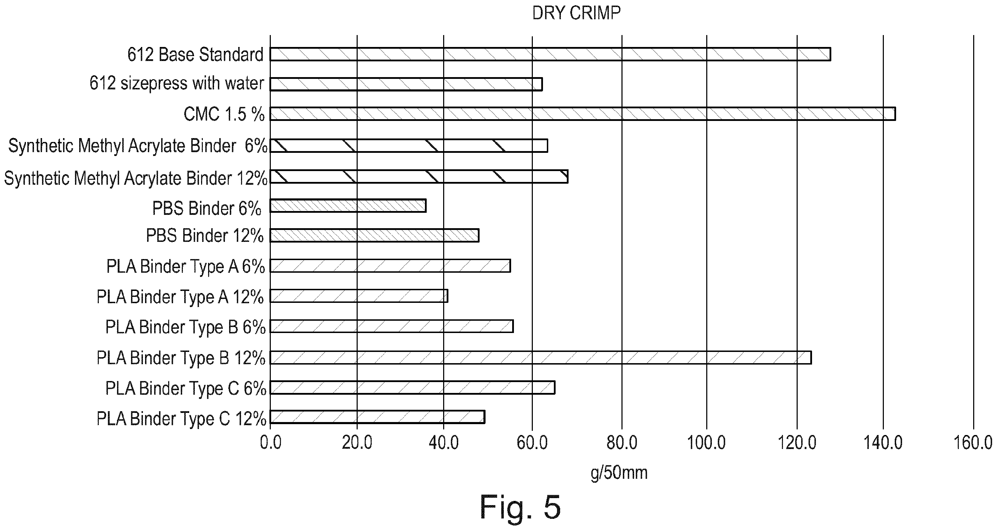

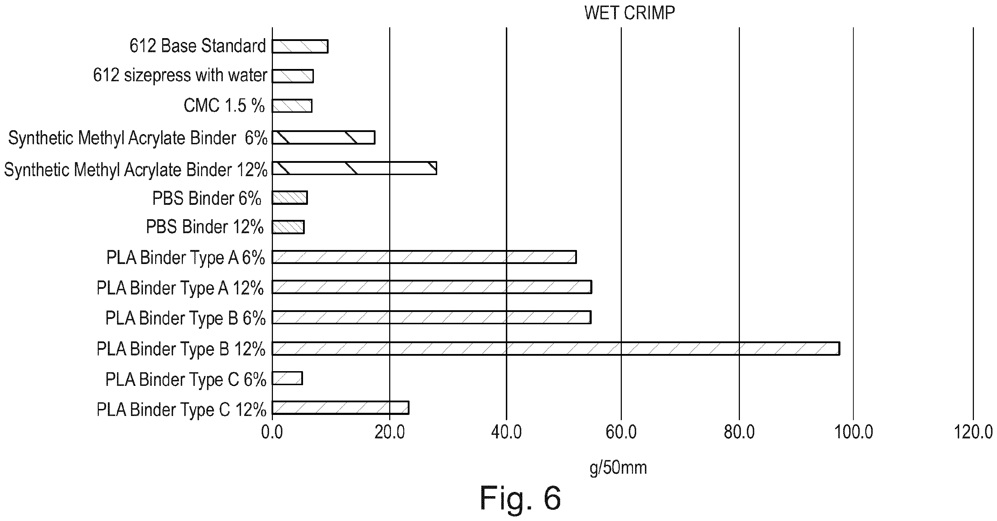

The results of the measurements of the dry crimp strength of the tested filter materials are shown in Figure 5 and the results of the measurements of the wet crimp strength of the tested filter materials are shown in Figure 6.

### Water climb (vertical capillary rise, wicking):

The water climb of the filter materials were determined by a test method similar to ISO 8787 paper and board, capillary rise - Klemm method, as elucidated in further detail below:

### 1 INTRODUCTION

This method is used to determine the degree of hydrophobicity of paper via the rate at which water is absorbed by capillary action.

### 2.0 APPARATUS

Ruler
Water
250 ml glass beaker
25mm width template or guillotine
Stopwatch
Bulldog clips
Stand and clamp.

### 3.0 EXPERIMENTAL DETAILS

3.1 Cut a sample strip 25mm wide and a minimum of 180 mm long.
3.2 Using a pencil, mark the paper strip with two straight lines across its width at 50mm (Position A) and 60mm (Position B) from one end.

### 4 METHOD

4.1 Attach a bulldog clip to each end of the paper strip and hang vertically from the clamp/stand. The bottom end of the strip is immersed in a beaker of water, and the clamp height adjusted such that the lowest pencil line (Position A) is parallel with the water surface.
4.2 If the paper is not completely hydrophobic the water will begin to climb up the paper strip. When the last part of the wet-line crosses the second pencil line (Position B) start the stopwatch.
4.3 When 10 minutes have elapsed mark the position on the strip of the lowest point of the wet-line (Position C)
4.4 Remove the strip from the clamp and bulldog clips and lay on a dark surface. Measure the distance from Position B to position C in mm.

### 5.0 RESULTS

The wicking rate is the distance measured in 4.4 and is quoted in units of mm/10mins.

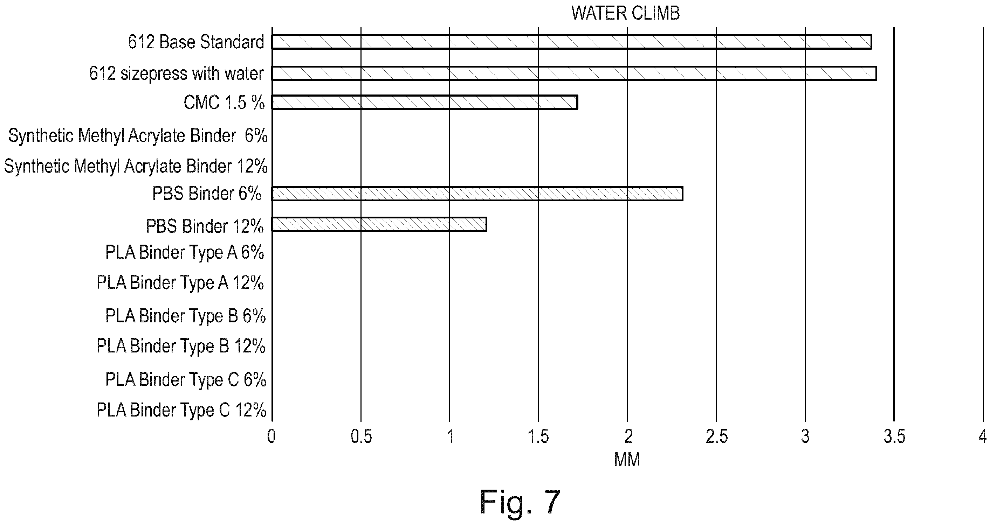

The results of the measurements of the wet climb of the tested filter materials are shown in Figure 7.

### Conclusions:

As it is evident from the results shown in Figures 3 and 4, the filter materials according to the present invention using a biobased and biodegradable PLA binder are superior in tensile strength both in the dry state and in particular also in the wet state over biobased binders, such as CMC, and other biodegradable binders, such as PBS, and even over conventional synthetic binders, such as methyl acrylate binders. Thus, the filter materials according to the present invention may fully comply with the requirements of a current hot and cold beverage bag using existing synthetic binder materials.

As it is evident from the results shown in Figures 5 and 6, while exhibiting a comparable dry crimp strength as some of the conventional binders or as filter materials without a binder, the filter materials according to the present invention using a biobased and biodegradable PLA binder exhibit a largely enhanced wet crimp strength over biobased binders, such as CMC, and other biodegradable binders, such as PBS, and even over conventional synthetic binders. Thus, the filter materials according to the present invention may efficiently prevent or significantly reduce ruptures at the crimp portion (crimped area) of a tea bag in the wet state, thereby avoiding leakages of solid tea particles upon brewing.

Moreover, as evident from the results shown in Figure 7, the filter materials according to the present invention using a biobased and biodegradable PLA binder exhibit substantially no wicking effect, in contrast to several of the Comparative Examples, which is indicative that the filter materials according to the present invention have a high degree of hydrophobicity involving an enhanced wet crimp strength due to suppression of water ingress into the crimped area.

## Claims

1. A filter material suitable for the preparation of hot and cold beverages, the filter material comprising:
(a) natural cellulosic fibers; and
(b) at least one non-fibrous binder selected from the group consisting of polylactic acid, polyglycolic acid and copolymers thereof.

2. The filter material according to claim 1, wherein the natural cellulosic fibers are selected from the group consisting of wood fibers, hemp fibers, manila fibers, jute fibers, sisal fibers, abaca fibers, kraft pulp or mixtures thereof.

3. The filter material according to claim 1 or 2, wherein the filter material comprises:
10 to 100 wt.-% of natural cellulosic fibers, in particular selected from wood pulp and cellulosic fibers having an average fiber length of from 1 mm to 10 mm;
0 to 40 wt.% of regenerated cellulose fibers, in particular viscose and/or lyocell;
0 to 40 wt.-% of thermoplastic biodegradable fibers.

4. The filter material according to any one of the preceding claims, wherein the at least one non-fibrous binder comprises polylactic acid.

5. The filter material according to any one of the preceding claims, wherein the at least one non-fibrous binder has an average particle size of less than 100 µm, in particular less than 2.5 µm.

6. The filter material according to any one of the preceding claims, wherein the at least one non-fibrous binder is contained in an amount of from 0.1 to 30 wt.-% based on the entire filter material.

7. The filter material according to any one of the preceding claims, wherein the filter material further comprises a wet-strength agent, in particular in an amount of from 0.1 to 3 wt.-% based on the entire filter material.

8. The filter material according to any one of the preceding claims, wherein the filter material fulfils at least one of the following properties:
- the filter material is biodegradable, in particular complies with the requirements of EN 13432;
- the filter material has a wet tensile strength of at least 20 g/50 mm;
- the filter material has a wet crimp strength of at least 80 g/50 mm;
- the filter material exhibits substantially no wicking.

9. Use of a non-fibrous binder selected from the group consisting of polylactic acid, polyglycolic acid and copolymers thereof for enhancing wet crimp strength of a filter material.

10. A process for producing a filter material suitable for the preparation of hot and cold beverages, the method comprising the steps of
providing a web comprising natural cellulosic fibers, and
applying at least one non-fibrous binder selected from the group consisting of polylactic acid, polyglycolic acid and copolymers thereof to the web.

11. The process according to claim 10, wherein the step of providing the web comprises forming the web by a wet-laid process, in particular by means of an inclined wire papermaking machine or a fourdrinier paper machine.

12. The process according to claim 10 or 11, wherein the step of applying the at least one non-fibrous binder comprises applying a liquid comprising the at least one non-fibrous binder, in particular wherein the liquid is applied by means of a size press and/or by at least one technique selected from the group consisting of impregnating, coating, printing and spraying.

13. The process according to any one of claims 10 to 12, further comprising, after the step of applying the at least one non-fibrous binder, a step of heating the filter material, in particular to a temperature of at least 125 °C.

14. A food packaging, in particular a tea bag, comprising the filter material according to any one of claims 1 to 8.

15. The food packaging according to claim 14, wherein the food packaging is a tea bag, wherein the at least one non-fibrous binder is present at the entire filter material, in particular at a crimp portion of the tea bag.

## Patentansprüche

1. Filtermaterial, das für die Zubereitung von heißen und kalten Getränken geeignet ist, wobei das Filtermaterial Folgendes umfasst:
(a) natürliche Cellulosefasern; und
(b) mindestens ein nichtfaseriges Bindemittel ausgewählt aus der Gruppe bestehend aus Polymilchsäure, Polyglykolsäure und deren Copolymeren.

2. Filtermaterial nach Anspruch 1, wobei die natürlichen Cellulosefasern ausgewählt sind aus der Gruppe bestehend aus Holzfasern, Hanffasern, Manilafasern, Jutefasern, Sisalfasern, Abaca-Fasern, Kraftzellstoff oder Mischungen davon.

3. Filtermaterial nach Anspruch 1 oder 2, wobei das Filtermaterial ferner Folgendes umfasst:
10 bis 100 Gew.-% natürliche Cellulosefasern, insbesondere ausgewählt aus der Gruppe bestehend aus Holzzellstoff und Cellulosefasern mit einer durchschnittlichen Faserlänge von 1 mm bis 10 mm;
0 bis 40 Gew.-% regenerierte Cellulosefasern, insbesondere Viskose und/oder Lyocell;
0 bis 40 Gew.-% an thermoplastischen, biologisch abbaubaren Fasern.

4. Filtermaterial nach einem der vorhergehenden Ansprüche, wobei das mindestens eine nicht-faserige Bindemittel Polymilchsäure umfasst.

5. Filtermaterial nach einem der vorhergehenden Ansprüche, wobei das mindestens eine nichtfaserige Bindemittel eine mittlere Teilchengröße von weniger als 100 µm, insbesondere weniger als 2,5 µm, aufweist.

6. Filtermaterial nach einem der vorhergehenden Ansprüche, wobei das mindestens eine nicht-faserige Bindemittel in einer Menge von 0,1 bis 30 Gew.-% bezogen auf das gesamte Filtermaterial enthalten ist.

7. Filtermaterial nach einem der vorhergehenden Ansprüche, wobei das Filtermaterial zusätzlich ein Nassfestmittel enthält, insbesondere in einer Menge von 0,1 bis 3 Gew.-% bezogen auf das gesamte Filtermaterial.

8. Filtermaterial nach einem der vorhergehenden Ansprüche, wobei das Filtermaterial mindestens eine der folgenden Eigenschaften erfüllt:
- das Filtermaterial ist biologisch abbaubar, insbesondere entspricht es den Anforderungen der EN 13432;
- das Filtermaterial weist eine Nasszugfestigkeit von mindestens 20 g/50 mm auf;
- das Filtermaterial weist eine Nasskräuselung von mindestens 80 g/50 mm auf;
- das Filtermaterial weist im Wesentlichen keine Dochtwirkung auf.

9. Verwendung eines nichtfaserigen Bindemittels, ausgewählt aus der Gruppe bestehend aus Polymilchsäure, Polyglykolsäure und deren Copolymeren, zur Erhöhung der Nasskräuselung eines Filtermaterials.

10. Verfahren zur Herstellung eines Filtermaterials, das für die Zubereitung von heißen und kalten Getränken geeignet ist, wobei das Verfahren die folgenden Schritte umfasst
Bereitstellen eines Vlieses, das natürliche Cellulosefasern enthält, und
Aufbringen mindestens eines nichtfaserigen Bindemittels, ausgewählt aus der Gruppe bestehend aus Polymilchsäure, Polyglykolsäure und deren Copolymeren, auf das Vlies.

11. Verfahren nach Anspruch 10, wobei der Schritt des Bereitstellens des Vlieses das Bilden des Vlieses durch ein Nasslegeverfahren umfasst, insbesondere mittels einer Schrägsieb-Papiermaschine oder einer Langsieb-Papiermaschine.

12. Verfahren nach Anspruch 10 oder 11, wobei der Schritt des Auftragens des mindestens einen nicht-faserigen Bindemittels das Auftragen einer Flüssigkeit umfasst, die das mindestens eine nicht-faserige Bindemittel enthält, insbesondere wobei die Flüssigkeit mittels einer Leimpresse und/oder durch mindestens eine Technik ausgewählt aus der Gruppe bestehend aus Imprägnieren, Beschichten, Drucken und Sprühen aufgetragen wird.

13. Verfahren nach einem der Ansprüche 10 bis 12, wobei nach dem Schritt des Auftragens des mindestens einen nichtfaserigen Bindemittels ein Schritt des Erhitzens des Filtermaterials, insbesondere auf eine Temperatur von mindestens 125 °C, vorgesehen ist.

14. Lebensmittelverpackung, insbesondere ein Teebeutel, umfassend das Filtermaterial nach einem der Ansprüche 1 bis 8.

15. Lebensmittelverpackung nach Anspruch 14, wobei es sich bei der Lebensmittelverpackung um einen Teebeutel handelt, wobei das mindestens eine nichtfaserige Bindemittel am gesamten Filtermaterial, insbesondere an einem Kräuselteil des Teebeutels, vorhanden ist.

## Revendications

1. Matériau filtrant convenant à la préparation de boissons chaudes et froides, le matériau filtrant comprenant :
(a) des fibres cellulosiques naturelles ; et
(b) au moins un liant non fibreux choisi dans le groupe constitué par l'acide polylactique, l'acide polyglycolique et leurs copolymères.

2. Matériau filtrant selon la revendication 1, dans lequel les fibres cellulosiques naturelles sont choisies dans le groupe constitué par les fibres de bois, les fibres de chanvre, les fibres de manille, les fibres de jute, les fibres de sisal, les fibres d'abaca, la pâte kraft ou leurs mélanges.

3. Matériau filtrant selon la revendication 1 ou 2, dans lequel le matériau filtrant comprend :
10 à 100 % en poids de fibres cellulosiques naturelles, en particulier choisies parmi la pulpe de bois et les fibres cellulosiques ayant une longueur moyenne de 1 mm à 10 mm ;
0 à 40 % en poids de fibres de cellulose régénérées, en particulier de viscose et/ou de lyocell ;
0 à 40 % en poids de fibres thermoplastiques biodégradables.

4. Matériau filtrant selon l'une quelconque des revendications précédentes, dans lequel l'au moins un liant non fibreux comprend de l'acide polylactique.

5. Matériau filtrant selon l'une quelconque des revendications précédentes, dans lequel l'au moins un liant non fibreux a une taille moyenne de particules inférieure à 100 µm, en particulier inférieure à 2,5 µm.

6. Matériau filtrant selon l'une quelconque des revendications précédentes, dans lequel l'au moins un liant non fibreux est contenu dans une proportion de 0,1 à 30 % en poids par rapport à l'ensemble du matériau filtrant.

7. Matériau filtrant selon l'une quelconque des revendications précédentes, dans lequel le matériau filtrant comprend en outre un agent pour la résistance à l'état humide, en particulier dans une proportion de 0,1 à 3 % en poids par rapport à l'ensemble du matériau filtrant.

8. Matériau filtrant selon l'une quelconque des revendications précédentes, dans lequel le matériau filtrant présente au moins l'une des propriétés suivantes :
- le matériau filtrant est biodégradable et répond notamment aux exigences de la norme EN 13432 ;
- le matériau filtrant a une résistance à la traction à l'état humide d'au moins 20 g/50 mm ;
- le matériau filtrant a une résistance au sertissage à l'état humide d'au moins 80 g/50 mm ;
- le matériau filtrant ne présente pratiquement pas d'effet de mèche.

9. Utilisation d'un liant non fibreux choisi dans le groupe constitué de l'acide polylactique, de l'acide polyglycolique et de leurs copolymères pour améliorer la résistance au sertissage à l'état humide d'un matériau filtrant.

10. Procédé de fabrication d'un matériau filtrant convenant à la préparation de boissons chaudes et froides, comprenant les étapes suivantes
fournir une bande comprenant des fibres cellulosiques naturelles, et
appliquer sur la bande au moins un liant non fibreux choisi dans le groupe constitué de l'acide polylactique, de l'acide polyglycolique et de leurs copolymères.

11. Procédé selon la revendication 10, dans lequel l'étape consistant à fournir la bande comprend la formation de la bande par un procédé par voie humide, en particulier au moyen d'une machine à papier à fil incliné ou d'une machine à papier Fourdrinier.

12. Procédé selon la revendication 10 ou 11, dans lequel l'étape d'application d'au moins un liant non fibreux comprend l'application d'un liquide comprenant au moins un liant non fibreux, en particulier dans lequel le liquide est appliqué au moyen d'une presse encolleuse et/ou par au moins une technique choisie dans le groupe constitué par l'imprégnation, l'enduction, l'impression et la pulvérisation.

13. Procédé selon l'une quelconque des revendications 10 à 12, comprenant en outre, après l'étape d'application d'au moins un liant non fibreux, une étape de chauffage du matériau filtrant, en particulier à une température d'au moins 125 °C.

14. Emballage alimentaire, en particulier un sachet de thé, comprenant le matériau filtrant selon l'une quelconque des revendications 1 à 8.

15. Emballage alimentaire selon la revendication 14, dans lequel l'emballage alimentaire est un sachet de thé, dans lequel au moins un liant non fibreux est présent sur l'ensemble du matériau filtrant, en particulier au niveau d'une portion de sertissage du sachet de thé.
